# DEMANDE DE BREVET EUROPEEN

(11) **EP 4 524 846 A1**
(43) Date de publication de la demande: **19.03.2025**
(21) Numéro de dépôt: 23306535.8
(22) Date de dépôt: 18.09.2023
(51) Int. Cl.: G06Q 10/0631, G06Q 10/0637, G06Q 50/18

(54) **PLATEFORME D'INTELLIGENCE DECISIONNELLE ET METHODE POUR PLATEFORME D'INTELLIGENCE DECISIONNELLE**

(71) Demandeur: ATOS FRANCE, 95870 Bezons (FR)
(72) Inventeur: LECROART, Yannick, 34280 La Grande Motte (FR)
(74) Mandataire: Novagraaf Technologies

(57) **Abrégé**

Plateforme d'intelligence décisionnelle comportant un entrepôt de données décisionnelles et un agent d'exécution pour réaliser une chaîne de traitements afin d'ingérer des données source et alimenter l'entrepôt de données décisionnelles. La plateforme accède à un document de gouvernance qui décrit les traitements de la chaîne de traitements et, pour un ou plusieurs traitements de la chaîne de traitements, une ou plusieurs règles de gouvernance et des vérifications relatives aux règles de gouvernance. Et, lors de l'exécution d'un traitement de la chaîne de traitements, les vérifications décrites dans le document de gouvernance sont réalisées et une alerte est remontée lorsqu'une vérification échoue.

## Description

### DOMAINE TECHNIQUE

Les différents exemples de réalisation décrits dans la présente divulgation concernent une plateforme d'intelligence décisionnelle et une méthode destinée à être exécutée par une plateforme d'intelligence décisionnelle pour exécuter une chaîne de traitements afin d'ingérer des données source et d'alimenter un entrepôt de données décisionnelles de la plateforme d'intelligence décisionnelle.

### ARRIERE PLAN

Une plateforme d'intelligence décisionnelle comporte un entrepôt de donnéesQ décisionnelles et un agent d'exécution pour réaliser au moins une chaîne de traitements afin d'ingérer des données source et d'alimenter l'entrepôt de données décisionnelles. L'entrepôt de données peut par exemple être requêté par un utilisateur au travers d'un portail pour obtenir des rapports d'intelligence décisionnelle.

Les données source à ingérer par la plateforme d'intelligence décisionnelle proviennent de sources variées et sont par nature évolutives.

Par exemple, à la suite d'une mise à jour de catalogue ou d'organisation de l'utilisateur de la plateforme d'intelligence décisionnelle, des paramètres peuvent être ajoutés, supprimés ou modifiés. Les différents intervenants qui fournissent des fichiers source peuvent également apporter des modifications à ces fichiers, par exemple des colonnes peuvent être ajoutées, supprimées, déplacées ou renommées dans les fichiers source. Dans le cas où des données sont collectées à partir de capteurs de l'Internet des objets (loT), les évolutions peuvent aussi porter sur les trames réseau utilisées pour remonter les données vers la plateforme d'intelligence décisionnelle. Par exemple, une mise à jour logicielle des objets connectés peut entraîner des modifications.

Toute évolution relative aux données source peut entraîner une rupture de la chaîne de traitements exécutée par la plateforme d'intelligence décisionnelle.

En cas de rupture de la chaîne de traitements, une mise à jour applicative de la plateforme d'intelligence décisionnelle est nécessaire, ce qui introduit un délai plus ou moins long selon la disponibilité des équipes de maintenance applicative de la plateforme et l'importance et le volume des évolutions à gérer.

### RESUME

Selon un premier aspect, une plateforme d'intelligence décisionnelle est proposée, qui comporte un entrepôt de données décisionnelles et un agent d'exécution pour réaliser au moins une chaîne de traitements afin d'ingérer des données source et d'alimenter l'entrepôt de données décisionnelles, caractérisé en que l'agent d'exécution est configuré pour:
- lire un document de gouvernance qui décrit les traitements de la chaîne de traitements et, pour un ou plusieurs traitements de la chaîne de traitements, une ou plusieurs règles de gouvernance et des vérifications relatives aux règles de gouvernance,
- lors de l'exécution d'un traitement de la chaîne de traitements, réaliser les vérifications décrites dans le document de gouvernance,
- remonter une alerte lorsqu'une vérification échoue.

Dans un mode de réalisation, la plateforme d'intelligence décisionnelle comporte un agent d'intégration déclenché lorsqu'une modification est apportée au document de gouvernance, l'agent d'intégration étant configuré pour lire le document de gouvernance modifié, réaliser un ou plusieurs traitements décrits dans le document de gouvernance modifié, réaliser les vérifications décrites dans le document de gouvernance modifié pour les traitements réalisés, et remonter une alerte lorsqu'une vérification échoue.

Selon un second aspect, une méthode est proposée qui est destinée à être exécutée par une plateforme d'intelligence décisionnelle pour exécuter au moins une chaîne de traitements afin d'ingérer des données source et d'alimenter un entrepôt de données décisionnelles de la plateforme d'intelligence décisionnelle. La méthode proposée comporte :
- une lecture d'un document de gouvernance qui décrit les traitements de la chaîne de traitements et, pour un ou plusieurs traitements de la chaîne de traitements, une ou plusieurs règles de gouvernance et des vérifications relatives aux règles de gouvernance,
- lors de l'exécution d'un traitement de la chaîne de traitement, une réalisation des vérifications décrites dans le document de gouvernance, pour le traitement réalisé,
- une remontée d'alerte lorsqu'une vérification échoue.

Dans un mode de réalisation, la méthode proposée comporte une détection de modification du document de gouvernance, et suite à ladite détection, une lecture du document de gouvernance modifié, une réalisation d'un ou plusieurs traitements décrits dans le document de gouvernance modifié, une réalisation des vérifications décrites dans le document de gouvernance modifié pour les traitements réalisés, et une remontée d'alerte lorsqu'une vérification échoue.

Dans un mode de réalisation, le document de gouvernance décrit un chemin d'accès aux données source et une vérification de bon fonctionnement du chemin d'accès à réaliser lors de l'exécution du ou des traitements pour ingérer les données source.

Dans un mode de réalisation, le document de gouvernance décrit un format des données source et une vérification de conformité des données source avec ledit format, à réaliser lors de l'exécution du ou des traitements pour ingérer les données source.

Dans un mode de réalisation la plateforme d'intelligence décisionnelle comporte un entrepôt de données opérationnelles dans lequel sont chargées les données ingérées par la plateforme d'intelligence décisionnelle, et le document de gouvernance décrit une règle de transcodage de données à appliquer aux données source pour que les données ingérées chargées dans l'entrepôt de données opérationnelles appartiennent à un référentiel connu de l'entrepôt de données opérationnelles.

Dans un mode de réalisation la plateforme d'intelligence décisionnelle comporte un entrepôt de données opérationnelles comportant des tables intermédiaires, le document de gouvernance décrit une structure de l'entrepôt de données opérationnelles et une vérification de conformité avec la structure de l'entrepôt de données opérationnelles, à réaliser lors de l'exécution d'un traitement de la chaîne de traitements qui impacte une ou plusieurs tables intermédiaires.

Dans un mode de réalisation, le document de gouvernance décrit une structure de l'entrepôt de données décisionnelles et une vérification de conformité avec la structure de l'entrepôt de données décisionnelles, à réaliser lors de l'exécution du ou des traitements pour alimenter l'entrepôt de données décisionnelles.

Selon un troisième aspect, un programme d'ordinateur et un produit programme d'ordinateur sont proposés, le programme d'ordinateur comportant des instructions qui lorsqu'elles sont exécutées par un processeur mettent en oeuvre la méthode dans l'un quelconque ou plusieurs des modes de réalisation décrits plus haut pris en combinaison. Dans un mode de réalisation, le produit programme d'ordinateur se présente sous la forme d'un support lisible par ordinateur ou directement chargeable dans un ordinateur.

Les agents d'exécution et d'intégration peuvent être constitués par des moyens logiciels, c'est-à-dire des instructions destinées à être exécutées par un ensemble de circuits pour effectuer une ou plusieurs ou toutes les opérations ou étapes à réaliser par la plateforme d'intelligence décisionnelle en application des méthodes décrites dans la présente divulgation. L'ensemble de circuits peut être constitué par une circuiterie dédiée. Il peut aussi être constitué à partir d'un ou plusieurs processeurs et d'une ou plusieurs mémoires comprenant un ou plusieurs codes de programme informatique, lesdits processeurs, mémoires et codes informatiques étant configurés pour amener la plateforme d'intelligence décisionnelle à exécuter une ou plusieurs ou toutes les étapes des méthodes décrites dans la présente divulgation.

### BREVE DESCRIPTION DES FIGURES

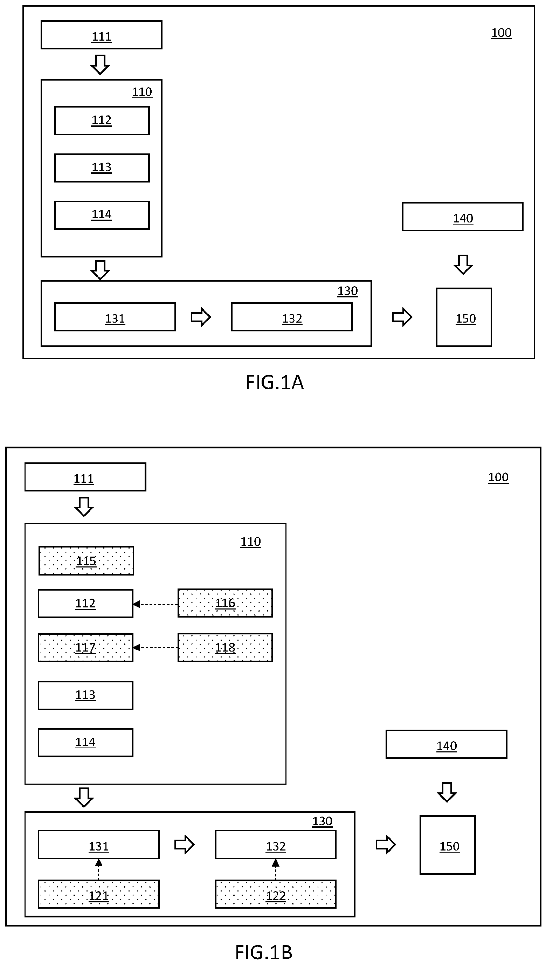

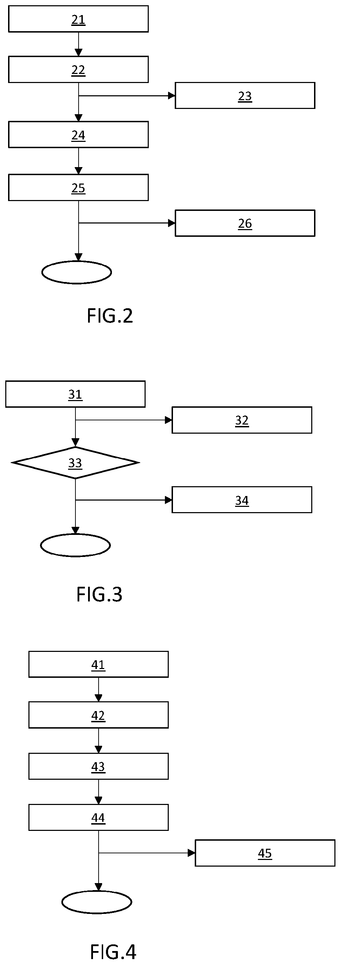

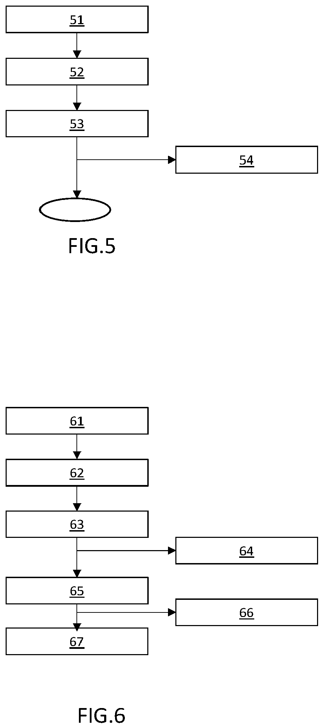

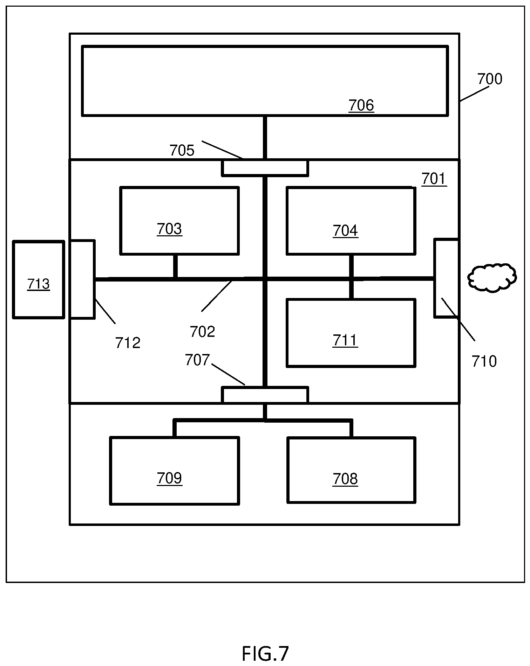

Les exemples de réalisation seront mieux compris à la lumière de la description détaillée qui va suivre et des dessins qui l'accompagnent, lesquels sont donnés à titre d'illustration uniquement et ne sont donc pas limitatifs de la présente divulgation.
La figure FIG.1A est un schéma donnant une description fonctionnelle d'un exemple de plateforme d'intelligence décisionnelle selon l'état de la technique.
La figure FIG.1B. est un schéma donnant une description fonctionnelle d'un exemple de plateforme d'intelligence décisionnelle selon la présente divulgation.
La figure FIG.2 est un diagramme décrivant l'exécution d'un traitement d'extraction de données source (couramment appelé ETL en anglais) dans un exemple de réalisation.
La figure FIG.3 est un diagramme décrivant l'exécution d'un traitement de transcodage des données source dans un exemple de réalisation.
La figure FIG.4 est un diagramme décrivant l'exécution des traitements réalisés au niveau de l'entrepôt de données dans un exemple de réalisation.
La figure FIG.5 est un diagramme décrivant l'exécution d'un traitement d'alimentation d'une table de données décisionnelles de l'entrepôt de données décisionnelles avec les données transformées produites par l'entrepôt de données opérationnelles, dans un exemple de réalisation.
La figure FIG.6 est un diagramme décrivant les étapes mises en oeuvre par un exemple d'agent d'intégration dans un exemple de réalisation.
La figure FIG.7 est un schéma blocs d'un dispositif hébergeant une plateforme telle que décrite dans la présente divulgation.

### DESCRIPTION DETAILLEE

Divers exemples de réalisation vont maintenant être décrits plus en détail, à titre d'exemples non limitatifs, en référence aux dessins qui accompagnent la présente divulgation et qui illustrent certains exemples de réalisation.

Les détails structurels et fonctionnels spécifiques décrits ici constituent des exemples non limitatifs. Les exemples de réalisation décrits ici peuvent faire l'objet de diverses modifications et formes alternatives. L'objet de la divulgation peut être réalisé sous de nombreuses formes différentes et ne doit pas être interprété comme étant limité aux seules réalisations présentées ici à titre d'exemples illustratifs. Il convient de comprendre qu'il n'y a aucune intention de limiter les modes de réalisation aux formes particulières décrites dans la suite de ce document.

Une plateforme d'intelligence décisionnelle comporte typiquement un entrepôt de données décisionnelles et un agent d'exécution pour exécuter une ou plusieurs chaînes de traitements destinées à ingérer des données source et alimenter l'entrepôt de données décisionnelles.

La figure FIG.1A est un schéma donnant une description fonctionnelle d'un exemple de plateforme d'intelligence décisionnelle selon l'état de la technique. Cette plateforme 100 comporte un module ETL (de l'anglais Extract - Transform - Load) référencé 110 et un module dorsal (backend en anglais) référencé 130. Le module ETL 110 accède aux données sources contenues dans un ou plusieurs fichiers source 111 provenant d'une ou plusieurs sources. Il exécute un traitement d'extraction 112, optionnellement (en fonction du cas d'usage) un ou plusieurs traitements de transformation 113, et un traitement de chargement 114 pour charger des données dans le module dorsal 130. Le module dorsal 130 comporte typiquement un entrepôt de données opérationnelles 131 (operational data store en anglais) et un entrepôt de données décisionnelles 132 (datawarehouse en anglais). L'entrepôt de données opérationnelles 131 centralise les données issues de différentes sources, dites données ingérées, les stocke de façon temporaire et réalise des traitements dans le but de produire des données compatibles avec l'entrepôt de données décisionnelles 132. Les données chargées par le module ETL dans l'entrepôt de données opérationnelles 131, ou produites par l'entrepôt de données opérationnelles 131, sont stockées dans des tables de l'entrepôt de données opérationnelles, dites tables intermédiaires. L'entrepôt de données décisionnelles 132 est optimisé pour l'analyse des données. Il est alimenté à partir des données produites par l'entrepôt de données opérationnelles 131. Il peut être requêté par un utilisateur ou un analyste 140, par exemple par l'intermédiaire d'un outil d'analyse et de visualisation de données 150.

Par exemple les traitements 113 effectués par le module ETL 110 peuvent inclure un nettoyage des données source pour éliminer des erreurs, incohérences ou doublons, et un transcodage des données pour les rendre compatibles avec un référentiel connu de la plateforme d'intelligence décisionnelle.

Les traitements réalisés par l'entrepôt de données opérationnelles 131 peuvent inclure des transformations sur les données, par exemple une modification de format, de structure, de type ou de contenu des données pour rendre les données compatibles avec la structure de l'entrepôt de données décisionnelles 132. Ces transformations peuvent par exemple impliquer des opérations de conversion, agrégation, normalisation, dénormalisation, calcul ou une création de nouvelles variables.

Selon l'état de la technique, tous ces traitements sont codés en dur.

Dans un exemple d'application, la plateforme d'intelligence décisionnelle est utilisée par une entreprise pour gérer une flotte de téléphones mobiles pour ses collaborateurs, les téléphones mobiles étant opérés par un opérateur fournisseur de services de télécommunications. Par exemple, les données source contiennent des données provenant de l'opérateur (par exemple des données de consommation et de facturation), des données RH provenant de l'entreprise (par exemple des données relatives à la structure organisationnelle de l'entreprise et à ses collaborateurs), des données achats provenant également de l'entreprise (par exemple un catalogue des téléphones mobiles utilisés dans l'entreprise). Un analyste de l'entreprise peut requêter la plateforme d'intelligence décisionnelle pour obtenir des rapports utilisés pour la gestion de la flotte de téléphones mobiles. La plateforme d'intelligence décisionnelle peut appartenir à l'entreprise et être hébergée sur site ou être hébergée dans des infrastructures publiques sur internet (cloud en anglais). L'opérateur fournisseur du service de télécommunications n'a pas accès à la plateforme d'intelligence décisionnelle et ne connaît pas son comportement.

Selon la présente divulgation, un document de gouvernance est prévu qui décrit les traitements de la chaîne de traitements à exécuter par la plateforme d'intelligence décisionnelle pour ingérer des données source et alimenter l'entrepôt de données décisionnelles et, pour un, plusieurs ou tous les traitements de cette chaîne de traitements, une ou plusieurs règles de gouvernance et des vérifications relatives aux règles de gouvernance qui doivent être réalisées par l'agent d'exécution lors de l'exécution des traitements de la chaîne de traitements. Ce document de gouvernance est par exemple stocké dans une mémoire de la plateforme d'intelligence décisionnelle, ou dans tout autre espace accessible par la plateforme.

Dans un mode de réalisation, la plateforme d'intelligence décisionnelle comporte un agent d'intégration qui est déclenché lorsqu'une modification est apportée au document de gouvernance. Cet agent d'intégration est configuré pour lire le document de gouvernance modifié et réaliser les vérifications décrites dans le document de gouvernance modifié lorsqu'il exécute des traitements de la chaîne de traitements décrits dans le document de gouvernance modifié.

Ces vérifications permettent de valider que les traitements s'exécutent correctement et qu'aucune rupture ne survient dans la chaîne de traitements. Dans le cas où une vérification échoue, l'agent d'exécution ou l'agent d'intégration remonte une alerte.

Des ruptures peuvent survenir dans la chaîne de traitements du fait d'une modification relative aux données source. Dans ce cas, la rupture est identifiée en production par l'agent d'exécution lors de l'exécution des traitements de la chaîne de traitements grâce aux vérifications réalisées. Une alerte est alors remontée permettant à une intervention humaine pour corriger le problème.

Des ruptures peuvent également survenir du fait d'une modification apportée au contenu du document de gouvernance par l'utilisateur de la plateforme. Dans ce cas, la plateforme détecte la modification et déclenche l'agent d'intégration qui exécute, dans un environnement distinct de l'environnement de production (par exemple un environnement de test, de développement et/ou d'intégration), un ou plusieurs traitements de la chaîne de traitements, et réalise les vérifications associées aux traitements réalisés dans le document de gouvernance modifié. Dans ce cas, la rupture est identifiée par l'agent d'intégration. Une alerte est remontée permettant une intervention humaine pour corriger le problème.

Dans un mode de réalisation, l'agent d'intégration n'est déclenché qu'après analyse de la modification apportée au document de gouvernance et confirmation par un intervenant humain que la modification est justifiée et doit être intégrée.

Dans un mode de réalisation, une table de correspondance dynamique est également prévue qui permet de définir des règles de transcodage de données entre un référentiel source et un référentiel connu de l'entrepôt de données opérationnelles 131. Le référentiel source peut ainsi être modifié par l'utilisateur de la plateforme, par ajout, suppression, modification de noms. L'utilisateur de la plateforme doit alors mettre à jour les règles de transcodage dans la table de correspondance pour garantir que toute donnée source a bien une correspondance dans le référentiel connu de l'entrepôt de données opérationnelles 131. Le chemin d'accès à la table de correspondance dynamique est par exemple inclus dans le document de gouvernance. Le transcodage est réalisé avant chargement des données dans l'entrepôt de données opérationnelles 131. Ce mode de réalisation permet à l'entreprise qui utilise la plateforme de faire évoluer son référentiel source sans impacter la chaîne de traitements ni nécessiter d'intervention de l'équipe de maintenance applicative de la plateforme pour réaliser des mises à jour dans le code source d'exécution des traitements.

La figure FIG.1B est un schéma donnant une description fonctionnelle d'un exemple de plateforme d'intelligence décisionnelle selon la présente divulgation, qui utilise un document de gouvernance tel que décrit ci-dessus.

Comme illustré sur la figure 1B, en amont du traitement d'extraction 112, le module ETL 110 effectue une lecture 115 du document de gouvernance. Puis il réalise des vérifications 116, décrites dans le document de gouvernance en lien avec le traitement d'extraction 112.

Par exemple le document de gouvernance décrit un chemin d'accès aux données source, au moins un format attendu pour les données sources, une vérification de bon fonctionnement du chemin d'accès pour valider que les données source sont bien accessibles à partir du chemin d'accès indiqué dans le document de gouvernance, et une vérification du format des données sources pour valider qu'il correspond au format attendu.

A la suite de ces vérifications 116, le module ETL 110 effectue une lecture 117 de la table de correspondance dynamique, une vérification de nommage des données à ingérer par rapport au référentiel connu de l'entrepôt de données opérationnelles 131, et le cas échéant, réalise un transcodage des données source en appliquant la règle de transcodage décrite dans la table de correspondance dynamique. Cette vérification et ce transcodage 118 permettent d'assurer que toutes les données qui vont être ingérées dans l'entrepôt de données opérationnelles 131 appartiennent bien au référentiel connu de l'entrepôt de données opérationnelles 131.

Le module ETL 110 réalise ensuite les traitements suivants de la chaîne de traitements, c'est-dire les traitements de transformation 113 puis les traitements 114 de chargement des données dans l'entrepôt de données opérationnelles 131.

Dans un mode de réalisation, le document de gouvernance décrit une structure de l'entrepôt de données opérationnelles 131, c'est-à-dire des différentes tables intermédiaires qui le composent. Il décrit également des vérifications à réaliser lorsque des données sont chargées dans une table intermédiaire, pour s'assurer que les données chargées sont conformes avec la structure de l'entrepôt de données opérationnelles. Ces vérifications peuvent porter sur le format de la donnée chargée et sur sa taille.

Lorsque des données sont chargées dans une table intermédiaire de l'entrepôt de données opérationnelles 131, une vérification 121 est ainsi réalisée pour valider que le chargement de données a bien été effectué en conformité avec la structure de l'entrepôt de données opérationnelles 131 telle que décrite dans le document de gouvernance.

Dans un mode de réalisation, le document de gouvernance décrit une structure de l'entrepôt de données décisionnelles et des vérifications à réaliser lors de l'exécution du ou des traitements pour alimenter l'entrepôt de données décisionnelles 132 à partir de l'entrepôt de données opérationnelles 131 afin de s'assurer que les données chargées sont conformes avec la structure de l'entrepôt de données décisionnelles 132.

Lorsque des données sont chargées dans une table de l'entrepôt de données décisionnelles 132, une vérification 122 est ainsi réalisée pour valider que le chargement de données a bien été effectué en conformité avec la structure de l'entrepôt de données décisionnelles 132 telle que décrite dans le document de gouvernance.

Le document de gouvernance peut être composé d'un ou plusieurs fichiers, par exemple de type CSV, YAML, XML ou autres. Le document de gouvernance est déclaratif. Il est lisible et compréhensible par un utilisateur humain.

Par exemple il est possible de structurer le document de gouvernance en une pluralité de plans de gouvernance, chaque plan de gouvernance étant stocké dans un fichier spécifique.

Un exemple de structure de document de gouvernance en plusieurs plans de gouvernance va maintenant être donné à titre illustratif. Dans cet exemple, le document de gouvernance comporte un plan principal, un plan de gouvernance générale, un plan de gouvernance associé au module ETL 110, un plan de gouvernance associé à l'entrepôt de données opérationnelles 131 et un plan de gouvernance associée à l'entrepôt de données décisionnelles 132. Ce mode de réalisation n'est pas limitatif. De nombreuses autres organisations du document de gouvernance sont possibles.

Le plan principal, stocké dans un fichier principal, permet de définir où se situent les fichiers associés à chacun des plans de gouvernance qui composent le document de gouvernance.

Le plan de gouvernance générale décrit les infrastructures et les services à utiliser par l'agent d'exécution ou par l'agent d'intégration, ainsi que le nom d'au moins un processus informatique à exécuter au sein de ces environnements en lien avec au moins une une chaîne de traitements. Par exemple, le plan de gouvernance générale peut indiquer d'exécuter un processus appelé « flotte mobile » et spécifier un outil d'orchestration à utiliser pour exécuter ce processus (par exemple Microsoft Azure).

Le plan de gouvernance du module ETL décrit différents processus à exécuter par le module ETL dans le cadre de l'exécution du processus général associé à la chaîne de traitements (par exemple « flotte mobile ») et, pour chaque processus, indique les traitements à réaliser, règles applicables et vérifications à effectuer. Par exemple, le processus « flotte mobile » mentionnée dans le plan de gouvernance générale peut utiliser un processus d'extraction des données qui proviennent de l'opérateur de télécommunications et, pour ce processus, le plan de gouvernance du module ETL peut indiquer :
- un traitement d'extraction de données 112 à réaliser,
- un chemin vers un fichier de données source à suivre pour obtenir les données sources,
- une vérification de bon fonctionnement du chemin d'accès,
- des colonnes attendues dans le fichier de données source (par exemple une colonne « Période », une colonne « Nom entreprise », une colonne « Code entreprise », une colonne « Compte client » , une colonne « Numéro d'abonné », etc...),
- une vérification de la présence desdites colonnes.

Le processus « flotte mobile » peut également utiliser un processus d'extraction de données qui proviennent d'une base données RH de l'entreprise et un processus d'extraction de données qui proviennent d'une base de données achats de l'entreprise, le plan de gouvernance pour ces deux autres processus étant similaires à celui qui vient d'être décrit pour l'extraction des données provenant de l'opérateur de télécommunications.

Dans un mode de réalisation, le plan de gouvernance du module ETL comporte un chemin d'accès à la table de correspondance dynamique décrite plus haut permettant d'effectuer une vérification de nommage des données source et le cas échéant un transcodage de ces données.

Le plan de gouvernance de l'entrepôt de données opérationnelles 131 décrit la structure de l'entrepôt de données opérationnelles 131 c'est-à-dire le schéma des tables intermédiaires qui constituent l'entrepôt de données opérationnelles 131. Pour chaque table intermédiaire, le plan de gouvernance de l'entrepôt de données opérationnelles 131 décrit les colonnes attendues, le type de données pour chaque colonne, les vérifications à faire sur les données lors du chargement de données dans la table intermédiaire, par exemple une vérification du type de données (par exemple une chaîne de caractère d'une longueur inférieure à une longueur maximum autorisée), et une vérification du nombre de lignes chargées dans la table (par exemple un nombre minimum de lignes peut être requis pour s'assurer que le table n'est pas vide).

Le plan de gouvernance de l'entrepôt de données décisionnelles 132 décrit la structure de l'entrepôt de données décisionnelles 132 c'est-à-dire le schéma des tables de données décisionnelles qui constituent l'entrepôt de données décisionnelles 132. Pour chaque table de données décisionnelles, le plan de gouvernance de l'entrepôt de données décisionnelles 132 décrit les colonnes attendues, le type de données pour chaque colonne, les vérifications à faire sur les données lors du chargement de données dans la table de données décisionnelles.

Ces vérifications de type et de taille de données ont pour but de valider que les données chargées dans les tables des entrepôts de données correspondent à ce qui est attendu. En d'autres termes, elles permettent de valider que la chaîne de traitements n'est pas impactée ou cassée par des modifications impactant les données source. Les vérifications effectuées sur l'environnement de production permettent une validation continue des données.

Les vérifications peuvent également être réalisées dans un environnement de test/développement/intégration, par exemple lorsqu'une modification du document de gouvernance est détectée. Elles permettent alors de valider que la chaîne de traitements n'est pas impactée ou cassée par les modifications apportées au document de gouvernance.

FIG.2 est un diagramme décrivant un exemple d'exécution d'un traitement d'extraction des données source.

La première étape 21 consiste à lire le plan de gouvernance associé au module ETL. A l'étape 22, conformément au contenu de ce plan de gouvernance, l'accessibilité du fichier source est vérifiée. Si le fichier n'est pas accessible, une alerte est envoyée à l'étape 23, par exemple par mail, à l'équipe chargée de la maintenance applicative de la plateforme. Si le fichier est accessible, le traitement se poursuit à l'étape 24 par la lecture du fichier source. A l'étape 25, les autres vérifications stipulées dans le plan de gouvernance sont réalisées, par exemple les vérifications de format. Si la vérification échoue, c'est-à-dire si le format des données source n'est pas conforme aux règles décrites dans le document de gouvernance, une alerte est envoyée à l'étape 26 à l'équipe chargée de la maintenance applicative de la plateforme. Si la vérification réussit l'exécution de la chaîne de traitements se poursuit.

La figure FIG.3 est un diagramme décrivant un exemple d'exécution d'un traitement de transcodage des données source. Par exemple, ce traitement de transcodage peut être effectué à la suite du traitement d'extraction décrit en référence à la figure FIG.2.

A l'étape 31, pour chaque donnée à ingérer, la table de correspondance dynamique est lue pour vérifier le nommage de la donnée et le cas échéant réaliser le transcodage. Si transcodage échoue, à l'étape 32, la donnée est ajoutée à une liste d'erreur. A l'étape 33, la liste d'erreurs est vérifiée. Si elle est vide, l'exécution de la chaîne de traitements se poursuit. Si elle contient des données pour lesquelles le transcodage a échoué, une alerte est envoyée à l'étape 34 à l'équipe chargée de la maintenance applicative de la plateforme.

La figure FIG.4 est un diagramme décrivant un exemple d'exécution des traitements réalisés au niveau de l'entrepôt de données opérationnelles 131.

La première étape 41 consiste à lire le plan de gouvernance associé à l'entrepôt de données opérationnelles 131. A l'étape 42, les traitements décrits dans le plan de gouvernance sont exécutés. Après exécution de ces traitements, les données des tables intermédiaires sont extraites à l'étape 43. Et à l'étape 44, les données extraites sont vérifiées pour valider que leur structure est conforme aux règles décrites dans le plan de gouvernance. Si la vérification échoue, à l'étape 45, une alerte est envoyée à l'équipe chargée de la maintenance applicative de la plateforme. Si la vérification réussit, l'exécution de la chaîne de traitements se poursuit.

La figure FIG.5 est un diagramme décrivant un exemple d'exécution d'un traitement d'alimentation d'une table de données décisionnelles de l'entrepôt de données décisionnelles 132 avec les données transformées produites par l'entrepôt de données opérationnelles 131.

A l'étape 51, les données provenant de l'entrepôt de données opérationnelles 131 sont chargées dans les tables de données décisionnelles de l'entrepôt de données décisionnelles 132. A l'étape 52, le plan de gouvernance associé à l'entrepôt de données décisionnelles 132 est lu pour obtenir la structure de l'entrepôt de données décisionnelles 132. A l'étape 53, les données des tables de données décisionnelles qui constituent l'entrepôt de données décisionnelles 132 sont extraites. Et à l'étape 53, les données extraites sont vérifiées pour valider que leur structure est conforme aux règles décrites dans le plan de gouvernance. Si la vérification échoue, à l'étape 54, une alerte est envoyée à l'équipe chargée de la maintenance applicative de la plateforme. Si la vérification réussit, l'exécution de la chaîne de traitements se poursuit. Dans un mode de réalisation, les traitements décrits en référence aux figures FIG.4 et FIG.5 s'effectuent table par table, les traitements relatifs aux différentes tables pouvant être exécutés en parallèle.La figure FIG.6 est un diagramme décrivant les étapes mises en oeuvre par un exemple d'agent d'intégration lorsqu'une ou plusieurs modifications doivent être apportées au fonctionnement de la plateforme après que le document de gouvernance ait été modifié.

A l'étape 61, l'agent d'intégration extrait du document de gouvernance les informations relatives à la chaîne de traitements à réaliser et aux modalités applicables à sa réalisation. A l'étape 62, la ou les modifications sont déployées. A l'étape 63, la chaîne de traitements est exécutée. Lors de l'exécution d'un traitement de la chaîne de traitements, les vérifications spécifiées dans le document de gouvernance sont réalisées pour s'assurer que les modifications apportées n'entraînent pas de rupture dans la chaîne de traitements. Lorsqu'une vérification échoue, une alerte est envoyée à l'équipe chargée de la maintenance applicative de la plateforme à l'étape 64. A l'étape 65, des contrôles de cohérence du code déployé sont réalisés. Lorsqu'un contrôle de cohérence échoue, une alerte est envoyée à l'étape 66. Si tous les contrôles de cohérence réussissent, à l'étape 67, la ou les modifications sont déployées en production.

La figure FIG. 7 représente un schéma fonctionnel de haut niveau d'un dispositif 700 de mise en oeuvre d'une plateforme telle que décrite dans la présente divulgation. Bien qu'illustré en un seul bloc, dans d'autres modes de réalisation, la plateforme peut également être mise en oeuvre à l'aide d'architectures parallèles et distribuées. Et les étapes mentionnées dans les méthodes décrites ci-dessus en référence aux FIG.2 à 6 peuvent être exécutées de manière séquentielle, en parallèle, ou dans un ordre différent en fonction d'implémentations particulières.

Selon un mode de réalisation donné à tire d'exemple, représenté sur la figure FIG.7, le dispositif 700 comprend une carte de circuit imprimé 701 sur laquelle un bus de communication 702 relie un processeur 703 (par exemple, une unité centrale de traitement "CPU"), une mémoire vive 704, un support de stockage 711, éventuellement une interface 705 pour connecter un écran 706, une série de connecteurs 707 pour connecter des dispositifs ou des modules d'interface utilisateur tels qu'une souris ou un trackpad 708 et un clavier 709, une interface de réseau sans fil 710 et/ou une interface de réseau câblé 712. Selon la fonctionnalité requise, le dispositif peut ne mettre en oeuvre qu'une partie de ce qui précède. Certains modules de la figure FIG.7 peuvent être internes ou connectés à l'extérieur, auquel cas ils ne font pas nécessairement partie intégrante du dispositif lui-même. Par exemple, l'écran 706 peut être un écran qui n'est connecté au dispositif 700 que dans des circonstances spécifiques, ou le dispositif 700 peut être contrôlé par un autre appareil doté d'un écran, et dans ce cas le dispositif 700 ne comporte aucun écran 706 ni aucune interface 705 spécifiques.

La mémoire 711 contient un ou plusieurs codes logiciels qui, lorsqu'ils sont exécutés par le processeur 703, permettent au dispositif 700 d'exécuter les méthodes décrites ici, notamment de mettre en oeuvre un agent d'exécution et un agent d'intégration. Dans un mode de réalisation donné à titre d'exemple, un support de stockage amovible 713, tel qu'une clé USB, peut également être connecté. Par exemple, le support de stockage détachable 713 peut contenir les codes logiciels à télécharger dans la mémoire 711.

Le processeur 703 peut être n'importe quel type de processeur tel qu'une unité centrale de traitement ("CPU") ou un microprocesseur dédié tel qu'un microcontrôleur intégré ou un processeur de signal numérique ("DSP").

Le dispositif 700 peut également comprendre d'autres composants que l'on trouve généralement dans les systèmes informatiques, tels qu'un système d'exploitation, des gestionnaires de file d'attente, des pilotes de périphériques ou un ou plusieurs protocoles de réseau qui sont stockés dans la mémoire 711 et exécutés par le processeur 703.

Les personnes du métier comprendront que tous les schémas fonctionnels présentés ici représentent des vues conceptuelles, données à titre d'exemple, de circuits incorporant les principes de la divulgation.

Chaque fonction, bloc, étape décrit peut être mis en oeuvre dans du matériel, des logiciels, des microprogrammes, des intergiciels, des microcodes ou toute combinaison appropriée de ceux-ci. S'ils sont mis en oeuvre dans un logiciel, les fonctions ou blocs des schémas fonctionnels et des organigrammes peuvent être mis en oeuvre par des instructions de programme d'ordinateur/codes de logiciel, qui peuvent être stockés ou transmis sur un support lisible par ordinateur, ou chargés sur un ordinateur à usage général, un ordinateur à usage spécial ou un autre appareil de traitement programmable et/ou un système, de sorte que les instructions de programme d'ordinateur ou les codes de logiciel qui s'exécutent sur l'ordinateur ou un autre appareil de traitement programmable, créent les moyens de mettre en oeuvre les fonctions décrites dans la présente description.

Bien que les aspects de la présente divulgation aient été décrits en référence à des réalisations particulières, il convient de comprendre que ces réalisations ne font qu'illustrer les principes et les applications de la présente divulgation. Il est donc entendu que de nombreuses modifications peuvent être apportées aux modes de réalisation illustratifs et que d'autres arrangements peuvent être conçus sans s'écarter de l'esprit et de la portée de la divulgation tels que déterminés sur la base des revendications et de leurs équivalents.

Les avantages et les solutions aux problèmes ont été décrits ci-dessus en ce qui concerne des modes de réalisation spécifiques de l'invention. Cependant, les avantages, les bénéfices, les solutions aux problèmes, et tout élément qui peut causer ou résulter en de tels avantages, bénéfices ou solutions, ou causer de tels avantages, bénéfices ou solutions à devenir plus prononcés ne doivent pas être interprétés comme une caractéristique ou un élément critique, requis, ou essentiel de l'une ou de l'ensemble des revendications.

## Revendications

1. Plateforme d'intelligence décisionnelle comportant un entrepôt de données décisionnelles et un agent d'exécution pour réaliser au moins une chaîne de traitements afin d'ingérer des données source et d'alimenter l'entrepôt de données décisionnelles, caractérisé en que l'agent d'exécution est configuré pour :
- lire un document de gouvernance qui décrit les traitements de la chaîne de traitements et, pour un ou plusieurs traitements de la chaîne de traitements, une ou plusieurs règles de gouvernance et des vérifications relatives aux règles de gouvernance,
- lors de l'exécution d'un traitement de la chaîne de traitements, réaliser les vérifications décrites dans le document de gouvernance,
- remonter une alerte lorsqu'une vérification échoue.

2. Plateforme d'intelligence décisionnelle selon la revendication 1, **caractérisée en ce qu'**elle comporte un agent d'intégration déclenché lorsqu'une modification est apportée au document de gouvernance, l'agent d'intégration étant configuré pour :
- lire le document de gouvernance modifié,
- réaliser un ou plusieurs traitements décrits dans le document de gouvernance modifié,
- réaliser les vérifications décrites dans le document de gouvernance modifié pour les traitements réalisés, et
- remonter une alerte lorsqu'une vérification échoue.

3. Méthode destinée à être exécutée par une plateforme d'intelligence décisionnelle pour exécuter au moins une chaîne de traitements afin d'ingérer des données source et d'alimenter un entrepôt de données décisionnelles de la plateforme d'intelligence décisionnelle, **caractérisée** en qu'elle comporte :
- une lecture d'un document de gouvernance qui décrit les traitements de la chaîne de traitements et, pour un ou plusieurs traitements de la chaîne de traitements, une ou plusieurs règles de gouvernance et des vérifications relatives aux règles de gouvernance,
- lors de l'exécution d'un traitement de la chaîne de traitement, une réalisation des vérifications décrites dans le document de gouvernance, pour le traitement réalisé,
- une remontée d'alerte lorsqu'une vérification échoue.

4. Méthode selon la revendication 3, **caractérisée** en qu'elle comporte :
- une détection de modification du document de gouvernance, et suite à ladite détection
- une lecture du document de gouvernance modifié,
- une réalisation d'un ou plusieurs traitements décrits dans le document de gouvernance modifié,
- une réalisation des vérifications décrites dans le document de gouvernance modifié pour les traitements réalisés, et
- une remontée d'alerte lorsqu'une vérification échoue.

5. Plateforme d'intelligence décisionnelle selon l'une des revendications 1 ou 2, ou méthode selon l'une des revendications 3 ou 4, **caractérisée en ce que** le document de gouvernance décrit un chemin d'accès aux données source et une vérification de bon fonctionnement du chemin d'accès à réaliser lors de l'exécution du ou des traitements pour ingérer les données source.

6. Plateforme d'intelligence décisionnelle selon l'une des revendications 1 ou 2 ou 5, ou méthode selon l'une des revendications 3 à 5, **caractérisée en ce que** le document de gouvernance décrit au moins un format des données source et une vérification de conformité des données source avec ledit format à réaliser lors de l'exécution du ou des traitements pour ingérer les données source.

7. Plateforme d'intelligence décisionnelle selon l'une des revendications 1, 2, 5 ou 6 ou méthode selon l'une des revendications 3 à 6, **caractérisée en ce que** la plateforme d'intelligence décisionnelle comporte un entrepôt de données opérationnelles dans lequel sont chargées les données ingérées par la plateforme d'intelligence décisionnelle, et le document de gouvernance décrit une règle de transcodage de données à appliquer aux données source pour que les données ingérées chargées dans l'entrepôt de données opérationnelles appartiennent à un référentiel connu de l'entrepôt de données opérationnelles.

8. Plateforme d'intelligence décisionnelle selon l'une des revendications 1, 2, 5, 6 ou 7, ou méthode selon l'une des revendications 3 à 7, **caractérisée en ce que** la plateforme d'intelligence décisionnelle comporte un entrepôt de données opérationnelles comportant des tables intermédiaires, le document de gouvernance décrit une structure de l'entrepôt de données opérationnelles et une vérification de conformité avec la structure de l'entrepôt de données opérationnelles, à réaliser lors de l'exécution d'un traitement de la chaîne de traitements qui impacte une ou plusieurs tables intermédiaires.

9. Plateforme d'intelligence décisionnelle selon l'une des revendications 1, 2, 5, 6, 7, ou 8, ou méthode selon l'une des revendications 3 à 8, **caractérisée en ce que** le document de gouvernance décrit une structure de l'entrepôt de données décisionnelles et une vérification de conformité avec la structure de l'entrepôt de données décisionnelles, à réaliser lors de l'exécution du ou des traitements pour alimenter l'entrepôt de données décisionnelles.

10. Programme d'ordinateur comportant des instructions qui lorsqu'elles sont exécutées par un processeur mettent en oeuvre la méthode selon l'une quelconque des revendications 3 à 9.
